# EUROPEAN PATENT APPLICATION

(11) **EP 4 379 854 A1**
(43) Date of publication of application: **05.06.2024**
(21) Application number: 23213559.0
(22) Date of filing: 30.11.2023
(51) Int. Cl.: H01M 4/136, H01M 4/58, H01M 4/36, H01M 10/052, H01M 4/02

(54) **CATHODE ACTIVE MATERIAL FOR LITHIUM SECONDARY BATTERY AND LITHIUM SECONDARY BATTERY INCLUDING THE SAME**

(30) Priority: 01.12.2022 KR 20220165833
(71) Applicant: SK On Co., Ltd., Seoul 03161 (KR); SK Innovation Co., Ltd., Seoul 03188 (KR)
(72) Inventor: KANG, Min Suk, 34124 Daejeon (KR); KIL, Hyo Shik, 34124 Daejeon (KR); DO, Ji Yae, 34124 Daejeon (KR); BEAK, Min Cheol, 34124 Daejeon (KR)
(74) Representative: Stolmár & Partner Patentanwälte PartG mbB

(57) **Abstract**

Cathode active materials for lithium secondary batteries and lithium secondary batteries including the cathode active materials are disclosed. In an embodiment, a cathode active material includes a lithium iron phosphate-based particle including a surface portion and a central portion, both of which includes vanadium (V). A total weight of the vanadium contained in the lithium iron phosphate-based particle includes a first weight amount of vanadium contained in the surface portion of the lithium iron phosphate-based particle and a second weight amount of vanadium contained in the central portion of the lithium iron phosphate-based particle, and the first weight amount is greater than the second weight amount.

## Description

### CROSS-REFERENCE TO RELATED APPLICATION AND CLAIM OF PRIORITY

This patent document claims the priority and benefits of Korean Patent Application No. 10-2022-0165833 filed on December 1, 2022, the entire disclosure of which is incorporated herein by reference.

### TECHNICAL FIELD

The disclosed technology relates to a cathode active material for a lithium secondary battery and a lithium secondary battery including the same. disclosed technology

### BACKGROUND

The rapid growth of electric vehicles and mobile electronic devices such as camcorders, mobile phones, and laptop computers, has brought increasing demands for secondary batteries, which can be charged and discharged repeatedly. Lithium secondary batteries, among others, are being widely developed and applied due to their high operational voltage and energy density per unit weight, a high charging rate, a compact dimension, etc.

### SUMMARY

In an aspect of the disclosed technology, there is provided a cathode active material for a lithium secondary battery having improved electrical property and power.

In an aspect of the disclosed technology, there is provided a lithium secondary battery having improved electrical property and power.

A cathode active material for a lithium secondary battery includes a lithium iron phosphate-based particle that includes a surface portion and a central portion, both of which includes vanadium (V). A total weight of the vanadium contained in the lithium iron phosphate-based particle includes a first weight amount of vanadium contained in the surface portion of the lithium iron phosphate-based particle and a second weight amount of vanadium contained in the central portion of the lithium iron phosphate-based particle. The first weight amount is greater than the second weight amount..

In some embodiments, the surface portion of the lithium iron phosphate-based particle may include a region corresponding to 25% of a radius of the lithium iron phosphate-based particle from an outermost surface of the lithium iron phosphate-based particle toward the central portion of the lithium iron phosphate-based particle.

In some embodiments, the first weight amount of vanadium contained in the surface portion of the lithium iron phosphate-based particle may be 70 wt% or more based on the total weight of vanadium contained in the lithium iron phosphate-based particle.

In some embodiments, the first weight amount of vanadium contained in the surface portion of the lithium iron phosphate-based particle may be 80 wt% or more of the total weight of vanadium contained in the lithium iron phosphate-based particle.

In some embodiments, the surface portion may include a concentration gradient section of vanadium. In some implementations, particles, layers, or other structures containing vanadium may include a portion in which the concentration of vanadium changes, and the term "concentration gradient section" can be used to indicate a portion or section of the surface portion of the lithium iron phosphate-based particle that has a difference in concentration of vanadium between a location of the concentration gradient section and another location of the concentration gradient section. In one example, a concentration of vanadium in the concentration gradient section of vanadium may decrease in a direction from the surface portion to the central portion of the lithium iron phosphate-based particle.

In some embodiments, the surface portion may include a section in which a concentration of vanadium decreases in a direction from an outermost surface of the lithium iron phosphate-based particle to a center of the lithium iron phosphate-based particle.

In some embodiments, a ratio of a length of the concentration gradient section in a direction from an outermost surface of the lithium iron phosphate-based particle to a center of the lithium iron phosphate-based particle relative to a radius of the lithium iron phosphate-based particle may be in a range from 0.001 to 0.5.

In some embodiments, vanadium may have a uniform concentration in the central portion.

In some embodiments, the lithium iron phosphate-based particle may further include titanium (Ti).

In some embodiments, the lithium iron phosphate-based particle may have a uniform concentration of titanium throughout the lithium iron phosphate-based particle.

In some embodiments, the cathode active material mary comprise a plurality of lithium iron phosphate-based particles including the lithium iron phosphate-based particle. An average particle diameter of the plurality of lithium iron phosphate-based particles may be in a range from 0.2 µm to 10 µm.

In some embodiments, the lithium iron phosphate-based particle may include a chemical composition represented by a chemical formula of:

LiₐFe_{b}M_{c}V_{d}PₑO₄

0.9≤a≤1.56, 0.15≤b≤1.01, 0≤c≤0.85, 0.001≤d≤0.85, 0.96≤e≤1.04, and M may include at least one element of Al, Mg, Ni, Co, Mn, Ti, Ga, Cu, Nb, Zr, Ce, In, Zn and Y.

A lithium secondary battery includes a cathode and an anode. The cathode includes a cathode active material , and the anode is disposed to face the cathode. The cathode active material includes a lithium iron phosphate-based particle that is structured to include a surface portion and a central portion, both of which includes vanadium. A total weight of the vanadium contained in the lithium iron phosphate-based particle includes a first weight amount of vanadium contained in the surface portion of the lithium iron phosphate-based particle and a second weight amount of vanadium contained in the central portion of the lithium iron phosphate-based particle. The first weight amount is greater than the second weight amount.

A cathode active material for a lithium secondary battery based on some embodiments of the disclosed technology includes a lithium iron phosphate-based particle and may contain vanadium (V). V may be doped or distributed at an inside of the lithium iron phosphate-based particle or in a crystal structure of a lithium iron phosphate to promote a transfer rate of lithium ions.

The lithium iron phosphate-based particle may include a surface portion and a central portion, and a concentration or a content of V may be increased in the surface portion. Accordingly, increase of a resistance and reduction of a power output due to a reduction of a conductivity at a particle surface may be prevented.

In some embodiments, the lithium iron phosphate-based particle may further include Ti, and Ti may have a substantially constant concentration or content from a center of the lithium iron phosphate-based particle to a surface of the lithium iron phosphate-based particle. Thus, a lithium ion channel expansion effect throughout the particle may be implemented by Ti, and the conductivity at the surface may be additionally improved by V.

The cathode active material and the lithium secondary battery of the disclosed technology may be widely applied in green technology fields such as an electric vehicle, a battery charging station, a solar power generation, a wind power generation, etc., using a battery, etc. The cathode active material and the lithium secondary battery based on some embodiments of the disclosed technology may be used for eco-friendly electric vehicles and hybrid vehicles to prevent a climate change by suppressing air pollution and greenhouse gas emissions. etc.

### BRIEF DESCRIPTION OF THE DRAWINGS

FIG. 1 is a schematic cross-sectional view illustrating a cathode active material for a lithium secondary battery based on some example embodiments.
FIG. 2 is a schematic plan view illustrating a lithium secondary battery based on some example embodiments.
FIG. 3 is a schematic cross-sectional view illustrating a lithium secondary battery based on some example embodiments.

### DETAILED DESCRIPTION

Section headings are used in the present document only for ease of understanding and do not limit scope of the embodiments to the section in which they are described.

The disclosed technology can be implemented in some embodiments to provide a cathode active material for a lithium secondary battery including lithium and phosphorous and a lithium secondary battery including the same.

A lithium secondary battery may store electrical energy in of chemical potentials at the cathode and anode by allowing lithium ions to move between the cathode and the anode of the lithium secondary battery. Accordingly, the cathode and the anode of the lithium secondary may respectively contain cathode active materials and anode active materials that allow for reversible chemical reactions of lithium ions for storing energy and for releasing the stored energy.

In some implementations, examples of the cathode active material may include lithium cobalt oxide (LiCoO₂), lithium nickel oxide (LiNiO₂), lithium manganese oxide (LiMnO₂), lithium iron phosphate (LFP), lithium nickel-cobalt-manganese oxide (NCM), lithium nickel- aluminum-manganese oxide (NCA), etc.

In some implementations, an LFP-based active material are cost-effective and have high chemical/structural stability compared to an NCM-based active material. However, the LFP-based active material may have relatively low ionic conductivity and may not provide sufficiently high power properties.

The disclosed technology can be implemented in some embodiments to provide a high-power LFP-based active material that can be applied to high-power, high-capacity devices such as electric vehicles (EVs).

In some example embodiments of the disclosed technology, a cathode active material for a lithium secondary battery may include a lithium iron phosphate-based particle. In some example embodiments of the disclosed technology, a lithium secondary battery may include the cathode active material including the lithium iron phosphate-based particle.

Reference will now be made in detail to embodiments of the disclosed technology, examples of which are illustrated in the accompanying drawings. However, the following description is merely an example and does not intended to limit the disclosed technology to a specific implementation.

### <Cathode Active Material for Lithium Secondary Battery>

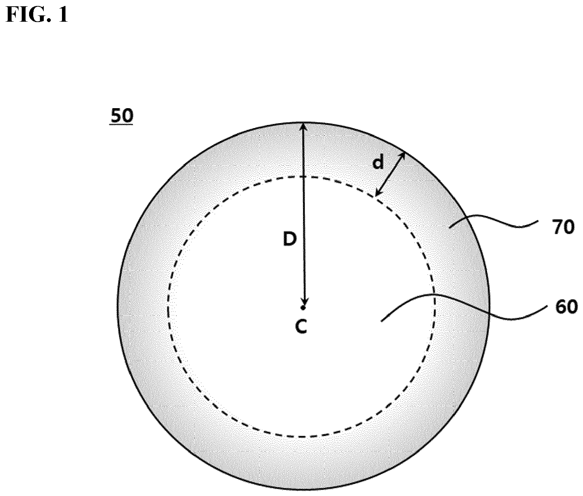

FIG. 1 is a schematic cross-sectional view illustrating a cathode active material for a lithium secondary battery based on some example embodiments.

Referring to FIG. 1, a cathode active material includes a lithium iron phosphate-based particle 50. In some embodiments of the disclosed technology, the cathode active material may be used as an active material for a cathode in a lithium secondary battery.

The cathode active material may include a plurality of the lithium iron phosphate-based particles 50. For example, a content of the lithium iron phosphate-based particles 50 may be 50 weight percent (wt%) or more of a total weight of the cathode active material. In some embodiments, the content of the lithium iron phosphate-based particles 50 may be 60 wt% or more, 70 wt% or more, 80 wt% or more, or 90 wt% or more based on the total weight of the cathode active material.

In an embodiment, the cathode active material may include the lithium iron phosphate-based particles 50. In one example, the cathode active material may substantially consist of the lithium iron phosphate-based particles 50. In an embodiment, the cathode active material may further include cathode active material particles different from the lithium iron phosphate-based particles 50 (e.g., nickel-cobalt-manganese (NCM)-based active material particles).

In some embodiments, the cathode active material or the lithium iron phosphate-based particle 50 may include phosphorus (P) and iron (Fe). In some embodiments, the cathode active material or the lithium iron phosphate-based particle 50 may further include vanadium (V) in addition to other materials such as phosphorus (P) and iron (Fe). In some embodiments, the lithium iron phosphate-based particles 50 may further include an additional metal (e.g., M in Chemical Formula 1 below) other than vanadium (V).

For example, the additional metal (M) may include at least one of Al, Mg, Ni, Co, Mn, Ti, Ga, Cu, Nb, Zr, Ce, In, Zn, and Y. In an embodiment, the additional metal (M) may include titanium (Ti).

In some embodiments, the lithium iron phosphate-based particle 50 may include a chemical composition represented by Chemical Formula 1 below.

LiₐFe_{b}M_{c}V_{d}PₑO₄ [Chemical Formula 1]

wherein, 0.9≤a≤1.56, 0.15≤b≤1.01, 0≤c≤0.85, 0.001≤d≤0.85 and 0.96<e<1.04, and M may include at least one of Al, Mg, Ni, Co, Mn, Ti, Ga, Cu, Nb, Zr, Ce, In, Zn, and Y. As described above, M may include Ti.

Chemical Formula 1 represents a main composition of a crystal structure or a chemical structure of the lithium iron phosphate-based particle 50, and is not intended to exclude an additional doping or coating element. For example, the lithium iron phosphate-based particle 50 may further include a non-metallic doping/coating element such as C, F, S, etc., in addition to the elements shown in Chemical Formula 1.

As illustrated in FIG. 1, the lithium iron phosphate-based particle 50 may include a central portion 60 and a surface portion 70. The lithium iron phosphate-based particle 50 may have a predetermined radius D from a particle center C. For example, the radius D may be an average particle diameter D50 corresponding to 50% in a volume cumulative distribution of the lithium iron phosphate-based particles 50.

The surface portion 70 may be an area corresponding to a predetermined length extending from a surface (e.g., an outermost surface) of the lithium iron phosphate-based particle 50 in a radial direction (e.g., a direction from the outermost surface of the lithium iron phosphate-based particle to the center of the lithium iron phosphate-based particle).

In some embodiments, the surface portion 70 may include a region corresponding to 25% of the total radius D from the surface of the lithium iron phosphate-based particle 50 toward the center of the lithium iron phosphate-based particle.

For example, the surface portion 70 may be a region of a length corresponding to about 25%, about 30%, about 35%, about 40%, about 45%, or about 50% of the total radius (D) from the surface of the lithium iron phosphate-based particle 50.

The central portion 60 may be a region of the lithium iron phosphate-based particle 50 that is not included in the surface portion 70 of the lithium iron phosphate-based particle 50.

In some example embodiments, the first weight amount of vanadium (V) contained in the surface portion 70 is greater than the second weight amount of vanadium (V) contained in the central portion 60, out of the total weight of vanadium (V) contained in the lithium iron phosphate-based particles 50.

In some example embodiments, an first weight amount of vanadium (V) contained in the surface portion 70 may be 70 wt% or more, e.g., 80 wt% or more of a total weight of vanadium (V) contained in the lithium iron phosphate-based particle 50.

In an embodiment, the first weight amount of vanadium (V) contained in the surface portion 70 may be in a range from 70 wt% to 95 wt%, e.g., from 80 wt% to 95 wt%, or from 85 wt% to 95 wt% of a total weight of vanadium (V) contained in the lithium iron phosphate-based particle 50.

In some embodiments, the surface portion 70 may include a concentration change section or a concentration gradient section of vanadium (V). In some example embodiments, the surface portion 70 may include a concentration change or concentration gradient section in which the concentration of vanadium decreases in a direction from the surface to the center C of the lithium iron phosphate-based particle 50. In some embodiments, such a concentration change or concentration gradient section may be referred to as a concentration reduction section.

In an embodiment, the concentration reduction section may be formed across an entire width of the surface portion 70. In an embodiment, the concentration reduction section may be formed in a partial region of the surface portion 70. For example, the concentration reduction section may be formed in a specific region between an outermost surface of the central portion 60 and the outermost surface of the lithium iron phosphate-based particle 50.

In FIG. 1, the reference character "d" indicates a length of the concentration gradient section. In some embodiments, a ratio (d/D) of the length (d) of the concentration gradient section to the radius (D) of the lithium iron phosphate-based particles 50 may be in a range from 0.001 to 0.5.

In an embodiment, the ratio (d/D) of the length (d) of the concentration gradient section to the radius (D) of the lithium iron phosphate-based particle 50 may be in a range from 0.1 to 0.5, from 0.1 to 0.4, from 0.1 to 0.3, or from 0.1 to 0.25.

In some example embodiments, iron (Fe) and the additional element M may have a substantially uniform concentration within the lithium iron phosphate-based particle 50. In some embodiments, the additional element M includes titanium Ti. In one example, the titanium Ti may have a substantially uniform concentration throughout the entire region of the lithium iron phosphate-based particle 50.

In some embodiments, the term "uniform concentration" may be used to indicate a situation where a substantial concentration gradient is not formed. The "uniform concentration" does not exclude a local concentration deviation and a slight concentration change resulting from conditional variations during a synthesis process.

For example, the term "uniform concentration" may be used to indicate a section in which a concentration of an element is maintained within ±5% or less, ±4% or less, ±3% or less, ±2% or less, or ±1% or less of an average molar ratio expressed in Chemical Formula 1 along the radial direction.

The lithium iron phosphate-based particles 50 may have an olivine-based structure expressed as, e.g., LiFePO₄ (LFP).

An LFP-based active material having an olivine-based structure may have improved crystal, structural and chemical stability compared to those of, e.g., a nickel-cobalt-manganese (NCM)-based active material having a layered structure. In some implementations, the LFP-based active material may be produced at a reduced cost compared to the NCM-based active material. Thus, the LFP-based active material may be stably applied to a large-capacity battery such as an electric vehicle battery.

However, the LFP-based active material may have a lithium ion conductivity less than the NCM-based active material and may have reduced power properties.

For example, the LFP-based active material has a hexagonal close-packed crystal structure, and the lithium ions may move along a one-dimensional path within the crystal structure. Thus, the lithium ion path may be relatively increased, and a lithium diffusion rate may be reduced.

Additionally, as charging and discharging are repeated and a state of charge (SoC) is lowered, a voltage/current drop may occur due to a rapid resistance increase on a surface of the LFP-based active material particle. For example, the voltage/current drop may be accelerated at a low temperature below 0°C.

However, in some example embodiments, vanadium (V) may be distributed within the lithium iron phosphate-based particles 50, and may be distributed together with titanium (Ti). Vanadium (V) and titanium (Ti) may be inserted into the crystal structure of the LFP-based active material to 3-dimensionally expand the lithium ion movement path. Accordingly, the diffusion rate of the lithium ions may be increased, and the power of the lithium secondary battery may be increased.

Further, the amount of vanadium (V) may be relatively increased on the surface portion 70, so that the resistance increase and the voltage/current drop that would have been easily occur in the surface portion 70 may be suppressed, and low-temperature power properties may be improved. As described above, 70 wt% or more, e.g., 80 wt% or more of vanadium (V) of the total weight of vanadium (V) may be concentrated on the surface portion 70 so that a power reduction from the surface portion 70 may be sufficiently prevented.

In some embodiments described above, the surface portion 70 may include the concentration gradient section of vanadium (V) to gradually increase power/ion conduction properties toward the surface. Additionally, vanadium (V) and titanium (Ti) may be distributed with substantially uniform concentrations in the central portion 60, so that a uniform three-dimensional ion transfer path may be created in the central portion 60 of the lithium iron phosphate-based particles 50.

In some embodiments, the average particle diameter (D50) of the lithium iron phosphate-based particles 50 may be adjusted to a range from 0.2 µm to 10 µm, from 0.5 µm to 5 µm, or from 0.7 µm to 2 µm.

In the above particle size range, an ion transfer rate may be increased by the reduction of the physical particle size while preventing an increase of a specific surface area and a reduction of an electrode density that would have been occurred due to an excessive particle size reduction.

In some embodiments, a carbon coating may be further formed on the outer surface of the lithium iron phosphate-based particle 50. In this case, an additional ionic conductivity may be obtained, and the output of the cathode active material and secondary battery may be further improved.

### <Lithium secondary battery>

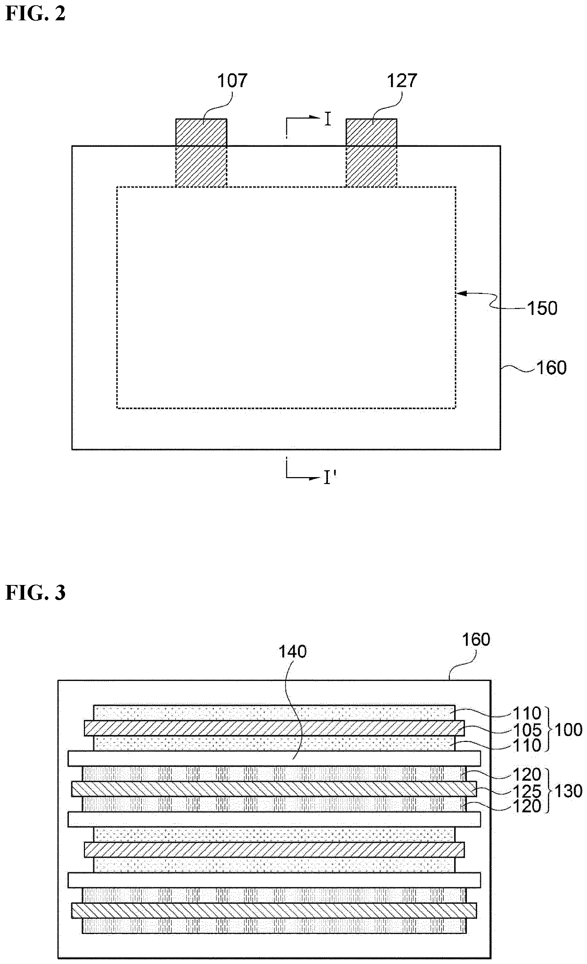

FIGS. 2 and 3 are a schematic plan view and a cross-sectional view, respectively, illustrating a lithium secondary battery based on some example embodiments. FIG. 3 is a cross-sectional view taken along a line I-I' of FIG. 2 in a thickness direction.

Constructions of the secondary battery are schematically illustrated in FIGS. 2 and 3 for convenience of descriptions, and the secondary battery of the disclosed technology is not limited to the shape/structure illustrated in FIGS. 2 and 3.

Referring to FIGS. 2 and 3, a lithium secondary battery may include a cathode 100 including the cathode active material layer containing the above-described cathode active material for a lithium secondary battery, and an anode 130 facing the cathode.

The cathode 100 may include a cathode active material layer 110 formed by coating the above-described cathode active material onto a cathode current collector 105.

For example, a slurry may be prepared by mixing and stirring the cathode active material with a binder, a conductive material and/or a dispersive agent in a solvent. The slurry may be coated on at least one surface of the cathode current collector 105, and dried and pressed to form the cathode 100.

The cathode current collector 105 may include, e.g., stainless steel, nickel, aluminum, titanium, copper, or an alloy of two or more of stainless steel, nickel, aluminum, titanium, copper, and may include, e.g., aluminum or an aluminum alloy.

The binder may include an organic based binder such as polyvinylidenefluoride (PVDF), a polyvinylidene fluoride-hexafluoropropylene copolymer (PVDF-co-HFP), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer 110 may be reduced, and an amount of the cathode active material may be relatively increased. Thus, capacity and power of the lithium secondary battery may be further improved.

The conductive material may be added to facilitate electron mobility between active material particles. For example, the conductive material may include a carbon-based material such as graphite, carbon black, graphene, carbon nanotube, etc., and/or a metal-based material such as tin, tin oxide, titanium oxide, a perovskite material such as LaSrCoO₃ or LaSrMnO₃, etc.

The anode 130 may include an anode current collector 125 and an anode active material layer 120 formed by coating an anode active material on the anode current collector 125.

The anode active material may include a material capable of adsorbing and ejecting lithium ions. For example, a carbon-based material such as a crystalline carbon, an amorphous carbon, a carbon complex or a carbon fiber, a lithium alloy, a silicon-based compound or tin may be used as the anode active material.

The amorphous carbon may include a hard carbon, cokes, a mesocarbon microbead (MCMB), a mesophase pitch-based carbon fiber (MPCF), etc.

The crystalline carbon may include a graphite-based material such as natural graphite, artificial graphite, graphitized cokes, graphitized MCMB, graphitized MPCF, etc.

The lithium alloy may further include at least one of aluminum, zinc, bismuth, cadmium, antimony, silicon, lead, tin, gallium, and indium.

For example, the anode active material may be mixed with a binder, a conductive material, a thickener, etc., in a solvent to form a slurry. The slurry may be coated on at least one side of the anode current collector 125, and then dried and pressed to form the anode 130.

The binder and the conductive material above may be substantially the same as or similar to those used in the cathode active material layer 110. In some embodiments, the binder for forming the anode 130 may include an aqueous binder such as styrene-butadiene rubber (SBR) for a compatibility with, e.g., the carbon-based active material, and carboxymethyl cellulose (CMC) may also be used as a thickener.

A separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, etc. The separation layer 140 may also include a non-woven fabric formed from a glass fiber with a high melting point, a polyethylene terephthalate fiber, etc.

In some embodiments, an area (e.g., a contact area with the separation layer 140) and/or a volume of the anode 130 may be greater than that of the cathode 100. Accordingly, transfer of lithium ions from the cathode 100 to the anode 130 may be facilitated without being precipitated.

In some example embodiments, an electrode cell is defined by the cathode 100, the anode 130 and the separation layer 140, and a plurality of the electrode cells may be repeatedly arranged to form an electrode assembly 150 having, e.g., a jelly-roll shape. In some embodiments, the electrode assembly 150 may be fabricated by winding, stacking or folding of the separation layer 140.

The electrode assembly 150 may be accommodated within a case 160 together with an electrolyte to define a lithium secondary battery. In some example embodiments, a non-aqueous electrolyte may be used as the electrolyte.

The non-aqueous electrolyte may include a lithium salt and an organic solvent. The lithium salt may be represented by Li⁺X⁻ , and an anion of the lithium salt X⁻ may include, e.g., F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination of two or more of the organic solvent materials listed above.

As illustrated in FIG. 2, electrode tabs (e.g., a cathode tab and an anode tab) may protrude from the cathode current collector 105 and the anode current collector 125 included in each electrode cell and may extend toward one side of the case 160. The electrode tabs may be welded together with the one side of the case 160 to be connected to an electrode lead (a cathode lead 107 and an anode lead 127) that may be extended or exposed to an outside of the case 160.

The lithium secondary battery may be manufactured in, e.g., a cylindrical shape using a can, a square shape, a pouch shape or a coin shape.

Examples discussed below show some embodiments of the disclosed technology.

### Example 1

### (1) Preparation of lithium iron phosphate particles(cathode active material)

70g of lithium hydroxide monohydrate (LiOH·H₂O), 300g of iron oxalate (FeC₂O₄·2H₂O), 192g of monobasic ammonium phosphate (NH₄H₂PO₄), 0.88g of titanium oxide (TiO₂) and 0.6g of vanadium oxide (V₂O₅) (a first input of vanadium oxide) was added to 500 ml of distilled water and stirred at 10,000 rpm for 30 minutes using a high shear mixer (IKA^{™}) to be partially dissolved and uniformly dispersed. Additionally, a specific amount of citric acid was added.

Lactose or sucrose powder in an amount equivalent to about 8 wt% of LiFePO₄, which was synthesized from the raw materials of the mixed solution, was added and dissolved, and then particles were pulverized using a ball mill. Thereafter, distilled water was removed from the obtained mixed solution through a spray drying. The dried powder was heat-treated in a nitrogen atmosphere at about 600°C for about 6 hours, and classification/de-iron was performed to obtain an LFP powder.

An additional 1.2 g of vanadium oxide (V₂O₅) (a second input of vanadium oxide) was added to the obtained LFP powder, mixed uniformly, and heat-treated in a nitrogen atmosphere at about 600°C for about 6 hours.

A chemical formula of the obtained lithium iron phosphate particles was confirmed to be LiFe_{0.99}Ti_{0.01}V_{0.01}PO₄, and an average particle diameter D50 was confirmed to be 1.2 µm.

### (2) Fabrication of lithium secondary battery

The lithium iron phosphate-based particles, carbon black and PVDF were dispersed in N-methyl-2-pyrrolidone (NMP) in a weight ratio of 92:5:3 to prepare a cathode slurry.

The cathode slurry was coated on an aluminum foil, dried and presses to prepare a cathode including a cathode active material layer.

An anode slurry was prepared by mixing natural graphite, carbon black as a conductive material, and styrene-butadiene rubber (SBR) as a binder in a weight ratio of 93:1:6. The anode slurry was coated on a copper foil, and then dried and pressed to prepare an anode.

The anode and the cathode were each notched in a circular shape and stacked, and an electrode assembly was formed with a separator (PE, 13 µm-thickness) interposed between the cathode and the anode.

The electrode assembly was stored in a coin cell case, and an electrolyte solution was added to the coin cell case to obtain a lithium secondary battery. As the electrolyte solution, a 1M LiPF₆ solution using an EC/EMC (30:70 v/v) mixed solvent was used.

### Example 2

A cathode active material (final formula: LiFe_{0.99}Ti_{0.01}V_{0.01}PO₄) of the same average particle size as that in Example 1 and a lithium secondary battery were prepared by the same method as that in Example 1, except that an amount of the first input of vanadium oxide was adjusted to 1.2 g and an amount of the second input of vanadium oxide was adjusted to 0.6 g.

### Comparative Example 1

A cathode active material of the same average particle size as that in Example and a lithium secondary battery were prepared by the same method as that in Example 1, except that 1.8 g of vanadium oxide was added during the first input and the additional input (second input) was omitted.

### Comparative Example 2

A cathode active material of the same average particle size as that in Example and a lithium secondary battery were prepared by the same method as that in Example 1, except that vanadium oxide was not added.

### Experiment Example

### (1) Measurement of vanadium distribution

1.00 g of each lithium iron phosphate-based particle of Examples and Comparative Examples was collected and etched from a particle surface using a 0.1 M HCl aqueous solution. While maintaining an etching rate to etch from the particle surface to a depth of 25% of a radius for 20 hours, a cumulative elution amount of phosphorus (P) and vanadium (V) for each section shown in Table 1 and Table 2 were measured using an inductively coupled plasma (ICP).

A cumulative elution amount was calculated based on the elution amount measured at a corresponding etching time relative to an amount measured after the lithium iron phosphate particles were completely dissolved.

The results are as shown in Tables 1 and 2 below.

**[Table 1]**

| etching hours | Example 1 | | Example 2 | |
|---|---|---|---|---|
| | cumulative elution amount | | cumulative elution amount | |
| | P(wt%) | V(wt%) | P(wt%) | V(wt%) |
| 2 | 0.64 | 9.8 | 0.65 | 6.8 |
| 4 | 1.33 | 12.06 | 1.35 | 11.35 |
| 6 | 2.30 | 13.65 | 2.31 | 12.69 |
| 8 | 3.89 | 18.54 | 3.90 | 15.54 |
| 10 | 6.64 | 27.39 | 6.66 | 24.31 |
| 15 | 14.59 | 56.86 | 14.57 | 48.92 |
| 20 | 26.44 | 89.11 | 26.46 | 65.21 |

**[Table 2]**

| etching hours | Comparative Example 1 | | Comparative Example 2 | |
|---|---|---|---|---|
| | cumulative elution amount | | cumulative elution amount | |
| | P(wt%) | V(wt%) | P(wt%) | V(wt%) |
| 2 | 0.69 | 0.81 | 0.65 | 0 |
| 4 | 1.37 | 1.60 | 1.36 | 0 |
| 6 | 2.32 | 2.70 | 2.34 | 0 |
| 8 | 3.90 | 4.53 | 3.91 | 0 |
| 10 | 6.67 | 7.80 | 6.70 | 0 |
| 15 | 14.61 | 17.34 | 14.65 | 0 |
| 20 | 26.51 | 30.55 | 26.57 | 0 |

Referring to Tables 1 and 2, phosphorus (P) formed substantially uniform concentration distributions in Examples and Comparative Examples.

In Examples 1 and 2, surface portions having a concentration gradient of vanadium were formed from an outermost surface to a region corresponding to a thickness of about 25% of the radius.

In Example 1, an amount corresponding to about 90 wt% of a total vanadium weight was distributed at the surface portion. In Example 2, an amount corresponding to about 65 wt% of a total vanadium weight was distributed at the surface portion.

In Comparative Example 1, a substantially uniform vanadium concentration distribution was formed without a concentration gradient throughout the particle.

### (2) Measurement of room temperature capacity

The lithium secondary battery manufactured according to each of Examples and Comparative Examples was charged (CC-CV 0.33 C 3.8V 0.05C CUT-OFF) and discharged (CC 0.33C 2.5V CUT-OFF) in a 25°C chamber, and then a battery capacity (discharge capacity) was measured. Thereafter, the battery was charged again under conditions of 0.33 C 3.8 V 0.05 C CUT-OFF.

### (3) Measurement of low-temperature capacity

The lithium secondary battery manufactured according to each of Examples and Comparative Examples was stored in a -10°C chamber for 3 hours, and then discharged (CC 0.33C 2.5V CUT-OFF) to measure a battery capacity (discharge capacity).

### (4) Measurement of capacity retention

For the lithium secondary battery manufactured according to each of Examples and Comparative Examples, 100 cycles of charging (CC-CV 0.33 C 3.8V 0.05C CUT-OFF) and discharging (CC 0.33C 2.5V CUT-OFF) were repeated in a 25°C chamber. A discharge capacity retention was evaluated as a percentage of a discharge capacity at the 100th cycle relative to a discharge capacity at the 1st cycle.

The evaluation results are shown in Table 3 below.

**[Table 3]**

| | room temperature capacity (mAh/g) | low temperature (-10°C) capacity (mAh/g) | low temperature capacity/room temperature capacity (%) | capacity retention (100 cycles) (%) |
|---|---|---|---|---|
| Example 1 | 155.5 | 127.9 | 82.3 | 99.5 |
| Example 2 | 154.1 | 121.5 | 78.8 | 98.9 |
| Comparative Example 1 | 153.1 | 112.4 | 73.4 | 98.3 |
| Comparative Example 2 | 150.4 | 86.3 | 57.4 | 92.6 |

Referring to Table 3, in Examples where the vanadium concentration gradient was formed at the surface portion and a relatively large amount of vanadium was concentrated at the surface portion, the resistance increase and the current/voltage drop during the low-temperature discharge were suppressed to improve low-temperature capacity properties and life-span properties. Additionally, in Example 1 where 80 wt% or more of vanadium was concentrated at the surface portion, improved low-temperature capacity properties and life-span properties were achieved.

The above-described experimental examples are included to provide exemplary examples of the concepts of the disclosed technology, and other elements may be further included without departing from the scope of the disclosed technology.

The disclosed technology can be implemented in rechargeable secondary batteries that are widely used in battery-powered devices or systems, including, e.g., digital cameras, mobile phones, notebook computers, hybrid vehicles, electric vehicles, uninterruptible power supplies, battery storage power stations, and others including battery power storage for solar panels, wind power generators and other green tech power generators. Specifically, the disclosed technology can be implemented in some embodiments to provide improved electrochemical devices such as a battery used in various power sources and power supplies, thereby mitigating climate changes in connection with uses of power sources and power supplies. Lithium secondary batteries based on the disclosed technology can be used to address various adverse effects such as air pollution and greenhouse emissions by powering electric vehicles (EVs) as alternatives to vehicles using fossil fuel-based engines and by providing battery-based energy storage systems (ESSs) to store renewable energy such as solar power and wind power.

Only specific examples of implementations of certain embodiments are described. Variations, improvements and enhancements of the disclosed embodiments and other embodiments may be made based on the disclosure of this patent document.

## Claims

1. A cathode active material for a lithium secondary battery comprising:
a lithium iron phosphate-based particle 50 including a surface portion 70 and a central portion 60, both of which includes vanadium,
wherein a total weight of the vanadium contained in the lithium iron phosphate-based particle 50 includes a first weight amount of vanadium contained in the surface portion 70 of the lithium iron phosphate-based particle 50 and a second weight amount of vanadium contained in the central portion 60 of the lithium iron phosphate-based particle 50,
wherein the first weight amount is greater than the second weight amount.

2. The cathode active material according to claim 1, wherein the surface portion 70 of the lithium iron phosphate-based particle 50 includes a region corresponding to 25% of a radius of the lithium iron phosphate-based particle 50 from an outermost surface of the lithium iron phosphate-based particle 50 toward the central portion 60 of the lithium iron phosphate-based particle 50.

3. The cathode active material according to claim 2, wherein the first weight amount of vanadium contained in the surface portion 70 of the lithium iron phosphate-based particle 50 is 70 wt% or more of the total weight of vanadium contained in the lithium iron phosphate-based particle 50.

4. The cathode active material according to claims 2 or 3, wherein the first weight amount of vanadium contained in the surface portion 70 of the lithium iron phosphate-based particle 50 is 80 wt% or more of the total weight of vanadium contained in the lithium iron phosphate-based particle 50.

5. The cathode active material according to one of claims 1 to 4, wherein the surface portion 70 includes a concentration gradient section of vanadium that has a difference in concentration of vanadium between a location of the concentration gradient section and another location of the concentration gradient section.

6. The cathode active material according to claims one of 1 to 5, wherein the surface portion 70 includes a section in which a concentration of vanadium decreases in a direction from an outermost surface of the lithium iron phosphate-based particle 50 to a center of the lithium iron phosphate-based particle 50.

7. The cathode active material according to claim 5, wherein a ratio of a length of the concentration gradient section in a direction from an outermost surface of the lithium iron phosphate-based particle 50 to a center of the lithium iron phosphate-based particle 50 relative to a radius of the lithium iron phosphate-based particle 50 is in a range from 0.001 to 0.5.

8. The cathode active material according to claims 5 or 7, wherein vanadium has a uniform concentration in the central portion.

9. The cathode active material according to one of claims 1 to 8, wherein the lithium iron phosphate-based particle 50 further includes titanium.

10. The cathode active material according to claim 9, wherein the lithium iron phosphate-based particle 50 has a uniform concentration of titanium throughout the lithium iron phosphate-based particle 50.

11. The cathode active material according to claims one of 1 to 10, wherein the cathode active material comprises a plurality of lithium iron phosphate-based particles including the lithium iron phosphate-based particle 50, and
an average particle diameter of the plurality of lithium iron phosphate-based particles is in a range from 0.2 µm to 10 µm.

12. The cathode active material according to claim 1, wherein the lithium iron phosphate-based particle 50 includes a chemical composition represented by a chemical formula of:
LiₐFe_{b}M_{c}V_{d}PₑO₄,
wherein, 0.9<a<1.56, 0.15≤b≤1.01, 0≤c≤0.85, 0.001≤d≤0.85, 0.96<e<1.04, and M includes at least one element of Al, Mg, Ni, Co, Mn, Ti, Ga, Cu, Nb, Zr, Ce, In, Zn and Y

13. A lithium secondary battery, comprising:
a cathode 100 comprising the cathode active material for a lithium secondary battery according to one of claims 1 to 12; and
an anode 130 facing the cathode.
